# EUROPEAN PATENT SPECIFICATION

(11) **EP 1 536 720 B1**
(45) Date of publication and mention of the grant of the patent: **17.09.2008**
(21) Application number: 02775557.8
(22) Date of filing: 02.09.2002
(51) Int. Cl.: A47B 96/00, E05F 3/00, F16F 9/512

(54) **DOOR DAMPER**
TÜRDÄMPFUNGSELEMENT
AMORTISSEUR POUR PORTE

(30) Priority: 29.07.2002 KR 2002022659 U
(43) Date of publication of application: 08.06.2005
(73) Proprietor: Moonju Hardware Co., Ltd., 405-846 Incheon (KR)
(72) Inventor: KIM, Jae-Hong, 157-010 Seoul (KR)
(74) Representative: Negrini, Elena
(86) International application number: PCT/KR2002/001657
(87) International publication number: WO 2004/021833

(56) References cited:
- KR-A- 20010 112 500
- US-A1- 2002 010 977

## Description

### TECHNICAL FIELD

The present invention relates to a door damper, in particular, which is adapted to prevent impact and resultant noise caused by collision of a hinged door with a doorframe upon closing the hinged door of a furniture or sink.

### BACKGROUND ART

As well known in the art, a furniture such as a clothes chest and bookstand or a sink at home is equipped with a door via a spring hinge allowing the door to be opened/closed.

The door fixed to the doorframe via the spring hinge as above is frequently opened/closed. In particular, in the case of closing the door rather than opening the same, it may not cause any problem if the door is carefully closed. However, if the door is abruptly and rapidly closed in an instant, the door collides with the doorframe to generate impact and resultant noise. Sometimes, the door may collide with the doorframe up to such an extent of potentially damaging itself.

Also, when the door is abruptly closed, a finger may be put between the doorframe and the door causing severe injury.

Frequently, careless children would thoughtlessly shove a door in a furniture or sink to close the same resulting in the above situations. Therefore, families with a number of children may frequently have noise and damage of the door.

Although a user personally attaches a damping member such as sponge or rubber pad to the doorframe of the furniture or sink, the damping member is readily damaged and insufficiently absorbs impact as drawbacks.

Recently door dampers such as a door closure are provided in order to overcome the above problems. However, the door closure is not only sophisticated in design but also typically used in an entrance door. The door closure is rarely used in the furniture or sink, and it is inefficient if used.

Document US2002/0010977 discloses an apparatus for the damping of impacts, preferably the impacts of furniture doors or drawers, consists of a cylinder with a piston whose piston rod sealingly guided out of a cylinder side forms a ram absorbing the impacts which divides the cylinder space filled with a liquid into two chambers and has perforations and/or, together with the cylinder wall, bounds a passage gap. A guide bushing guiding the piston rod is arranged in the region of the discharge end of the cylinder. A compression spring is clamped between the piston and the cylinder bottom. To ensure a smooth and quiet running with a compact construction, the guide bushing has a central shaft part of reduced diameter. A widened end part of the guide bushing is supported on a step or annular flange constricting the inner diameter of the cylinder and the guide bushing is supported at the other end on a cover closing the cylinder. The shaft part of the guide bushing is encompassed by a tube-section-like part made of elastic material.

### DISCLOSURE OF THE INVENTION

The present invention has been made to solve the foregoing problems and it is therefore an object of the present invention to provide a door damper capable of affording a comfortable home atmosphere by minimizing impact generated in closing a door and resultant noise.

It is another object of the invention to provide a door damper capable of preventing injury of a finger or other body regions put between a door and a doorframe when the door is suddenly closed.

According to an aspect of the invention to obtain the above objects, it is provided a door damper comprising: a housing defined by an oil chamber and an oil leakage-preventive chamber for preventing oil leakage; a rod inserted into the housing and having a channel groove in an outer periphery; first and second valves each having a plurality of channels, the first and second valves being mounted on the rod with the channels communicating with the channel groove and thereby installed in the oil chamber; a support spring for supporting the second check valve; a first anti-release member for preventing release of the first and second check valves and the support spring; a bushing having a packing in an outer periphery and seated on the oil leakage-preventive chamber; an oil seal contacting with the bushing and having a shaft portion and a flange portion; a housing cover having a seating projection in an inner bottom and a coupling projection in an outer bottom, the coupling projection having a coupling recess for receiving the shaft portion of the oil seal; a restoring spring with one end mounted on an outer periphery of the seating projection; a fixing cap mounted on the other end of the restoring spring; a second anti-release member for preventing release of the bushing, the oil seal, the housing cover, the restoring spring and the fixing cap mounted on the rod; and a bumper being coupled with the fixing cap.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a longitudinal cross-sectional view of a door damper of the invention when a door is opened;
Fig. 2 is a longitudinal cross-sectional view of the door damper of the invention when the door is abruptly closed or applied with surge pressure;
Fig. 3 is a longitudinal cross-sectional view of the door damper of the invention when the door is closed;
Fig. 4 illustrates a rod and a housing shown in Fig. 1;
Fig. 5 is an exploded view of components shown in Fig. 1;
Fig. 6 is a front elevation view of the first and second check valves; and
Fig. 7 is a perspective view of the door damper shown in Fig. 1 as installed.

### BEST MODE FOR CARRYING OUT THE INVENTION

The following detailed description will present a preferred embodiment of the invention in reference to the accompanying drawings.

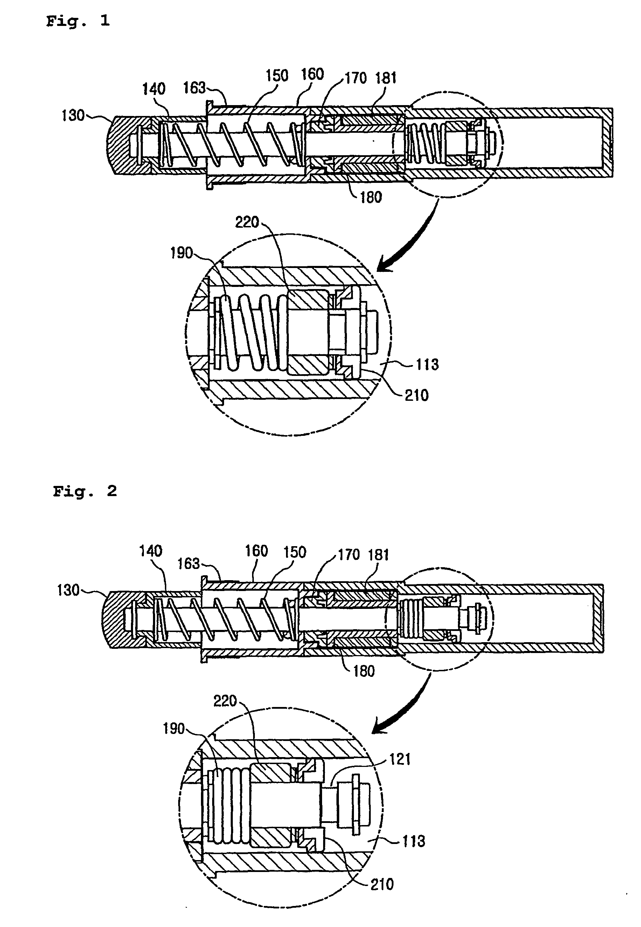

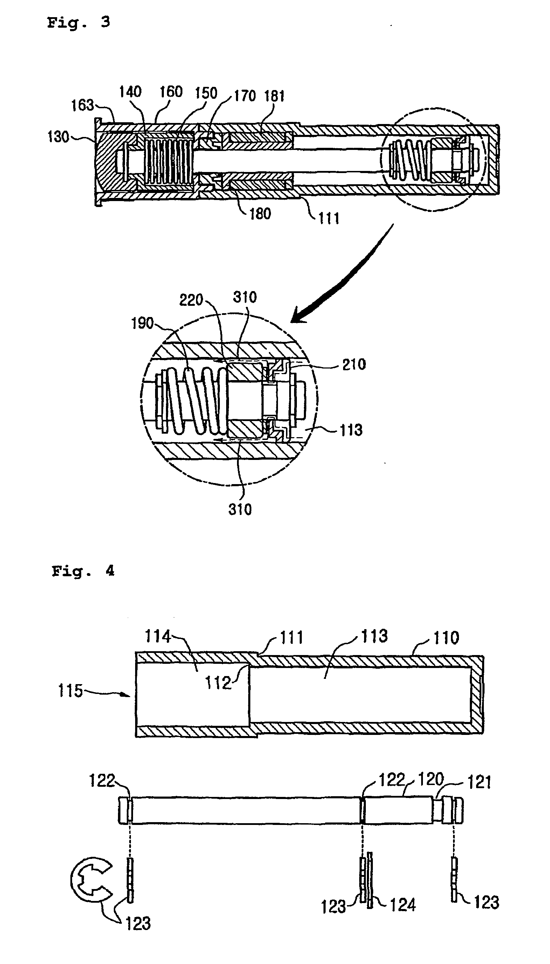

Fig. 1 is a longitudinal cross-sectional view of a door damper of the invention when a door is opened, Fig. 2 is a longitudinal cross-sectional view of the door damper of the invention when the door is abruptly closed or applied with surge pressure, and Fig. 3 is a longitudinal cross-sectional view of the door damper of the invention when the door is closed.

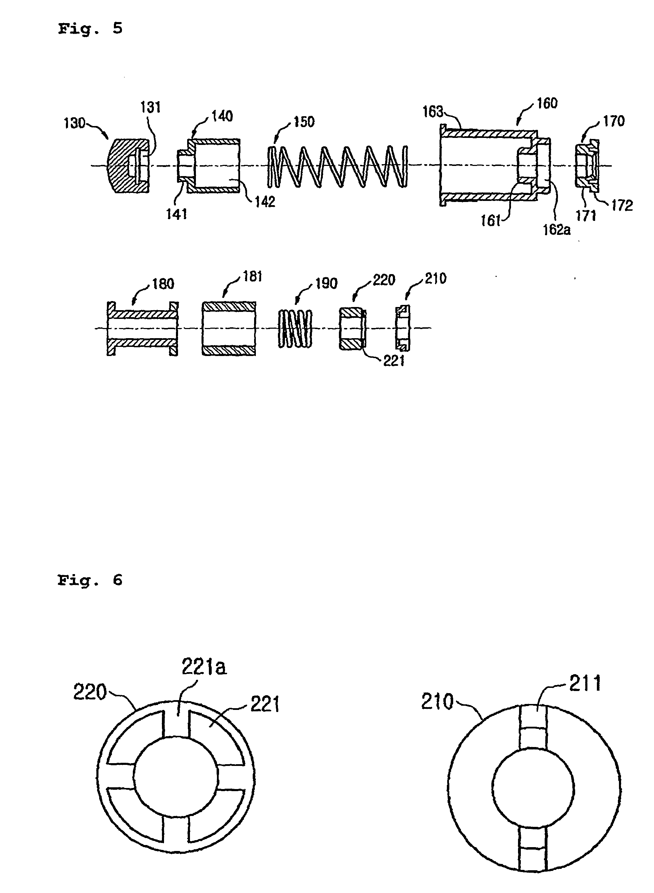

Fig. 4 illustrates a rod and a housing shown in Fig. 1, Fig. 5 is an exploded view of components shown in Fig. 1, Fig. 6 is a front elevation view of the first and second check valves.

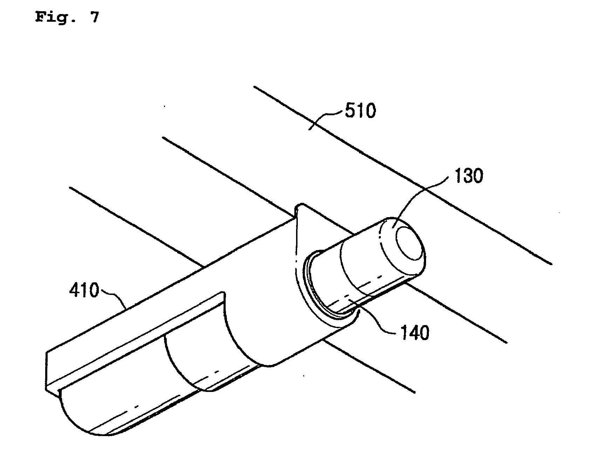

In the meantime, Fig. 7 is a perspective view of the door damper shown in Fig. 1 as installed in a door.

In the door damper of the invention installed in a doorframe, as shown in Fig. 4, a housing 110 has step shoulders 111 and 112 respectively disposed in outer and inner peripheries, an oil leakage-preventive chamber 114 divided from the oil chamber 113 by the step shoulder 112 disposed the inner periphery, and an opening 115 formed in one side of the oil leakage-preventive chamber 114.

The step shoulder 111 may be provided in other portions rather than the outer periphery according to alternative embodiments.

A rod 120 shown in Fig. 4 has a channel groove 121 for oil flow and a number of gripping grooves 122 for fixing various components in the outer periphery. The gripping grooves 122 are fitted with anti-release members such as E-rings 123 to prevent components shown in Fig. 5 from separating from the rod 120.

Fig. 5 illustrates the components shown in Fig. 1, in which the first check valve 210 has two horizontal channels 211 which are linearly disposed in two directions and the second check valve 220 has four channels 221a which are disposed in four crosswise directions as shown in Fig. 6.

Although the channels 221a in the second check valve 220 are disposed only horizontal to projections 221, the second check valve 220 may further have vertical channels penetrating a body thereof to communicate with the horizontal channels.

The first and second check valves 210 and 220 are mounted around the rod 120 via their hollow spaces to communicate with the channel grooves 121.

The channels 221a of the second check valve 220 are preferably disposed in four directions by the following reasons:

When the door is closed, the rod 120 is advanced pressing oil so that the pressure of oil is raised while oil flows through the channels 211 and 221a and the channel groove 121 possibly generating bubbles. The channels 221a are so structured to minimize bubble generation from oil.

In other words, the channels 221a are disposed in four directions to minimize "rumbling" sound of bubble generation.

Although the first check valve 210 is playable within the housing 110 while the outside diameter of the first check valve 210 substantially matches the inside diameter of the housing 110 to leave substantially no aperture, the outside diameter of the second check valve 220 is provided smaller than the inside diameter of the housing 110 so as to define an oil-pressure channel 310 between the outside diameter of the second check valve 220 and the inside diameter of the housing 110.

If the second check valve 220 has the vertical channels communicating with the horizontal channels in the body as set forth above, it is not needed to provide the oil-pressure channel 310.

The inventive door damper is also provided with a support spring 190 which is inserted into the rod 120 for supporting the second check valve 220.

The first and second check valves 210 and 220 and the support spring 190 are mounted on the rod 120 free from release via the E-rings 123 and a washer 124 which are inserted into the gripping grooves 122 of the rod 120 as shown in Fig. 4.

The washer 124 is disposed on one of the E-rings 123 contacting with the bottom of the support spring 190 to enlarge the supporting area of the support spring 190 so that the support spring 190 is smoothly compressed when surge pressure is abruptly applied to the door.

In the meantime, a bushing 180 equipped in the outer periphery with a sponge-shaped packing 181 made of foam rubber is fitted around the rod 120 via its hollow space, and then seated on the step shoulder 112 of the oil leakage-preventive chamber 114.

An oil seal 170 having a shaft portion 171 and a flange portion 172 is fitted around the rod 120 via its hollow space to contact with the bushing 180.

The bushing 180 and the oil seal 170 are installed in the oil leakage-preventive chamber 114 as set forth above.

As set forth above, the first and second check valve 210 and 220 and the support spring 190 are inserted into the oil chamber 112 as fitted around the rod 120 while the bushing 180 and the oil seal 170 are inserted into the oil leakage-preventive chamber 114 as fitted around the rod 120.

The opening 115 of the housing 110 receives a cylinder-shaped housing cover 160 having a seating projection 161 in the inner bottom and a coupling projection 162 having a coupling recess 162 in the outer bottom. The housing cover 160 is fitted around the rod 120 via a hollow space penetrating the seating projection 161 and the coupling recess 162a. The outer periphery of the coupling projection 162 is closely contacted with the inner periphery of the housing 110 while the shaft portion 171 of the oil seal 170 is inserted into the coupling recess 162a so that the housing cover 160 is pressed into the opening 115 of the housing 110.

The undesignated reference number 163 is a support projection which is provided around the housing cover 160 with a predetermined gap. Where the door damper of the invention is installed in a recess of a doorframe 510 or holder 410 as shown in Fig. 7, the support projection tightly contacts with the inner periphery of the recess or the holder 410 to prevent play of the door damper.

Further, the housing cover 160 receives a restoring spring 150 having one end fitted around the outer periphery of the seating projection 161 and the other end fitted into a fixing cap 140. The fixing cap 140 has a support projection 141, an insertion recess 142 and a hollow extending between the support projection 141 and the insertion recess 142. The other end of the restoring spring 150 is inserted into the insertion recess 142.

The bushing 180, the oil seal 170, the housing cover 160, the restoring spring 150 and the fixing cap 140 are mounted on the rod 120 free from release via the E-rings 123 which are inserted into the gripping grooves 122 of the rod 120 as shown in Fig. 4.

As shown in Figs. 1 and 5, the door damper also has a bumper 130 contacting with the door and coupled to one of the E-rings 123 and the support projection 141 of the fixing cap 140. The bumper 130 has a mounting recess 131 into which the E-ring 123 and the support projection 141 of the fixing cap 140 are inserted and engaged.

As set forth above, the components assembled to the rod 120 of the invention are incorporated with the rod 120 without release therefrom via the three E-rings 123 and the one washer 124 shown in Fig. 4.

Although the door damper of the invention having the above structure is preferably provided in a cylindrical configuration, the configuration can be variously modified according to alternative embodiments thereof.

In the meantime, while the door damper can be installed in the recess provided in the doorframe as set forth above, it is also preferred if the door damper is installed via the holder 410 as shown in Fig. 7 since deformation of the doorframe obstructs correct linear collusion of the bumper 130 in the door damper with the door probably reducing damping effect and causing trouble to the door damper.

That is, where the door damper is inserted into the holder 410, the step shoulder 111 in the outer periphery of the housing 110 is trapped by a step shoulder (not shown) formed in the holder 410, thereby exposing only the bumper 130 and the fixing cap 140.

Hereinbefore detailed description has been made about the constitution of the door damper and the assembly relation among the components thereof. The following description will specifically present the operation of the damper in opening/closing the door, in particular, the operation of the damper in closing the door according to the major characteristic of the invention.

Where the door damper of the invention is mounted on the doorframe 510, the door of the furniture or sink is opened not to apply any pressure to the door damper as shown in Fig. 1.

When the door is lightly closed from this position, the door touches the bumper 130 pressing the same so that the bumper 130 and the fixing cap 140 are inserted into the housing cover 160 pushing the rod 120 toward the inmost position in the housing as shown in Fig. 3. This closes the door compressing the restoring spring 150 according to the following principle:

When the door collides with the bumper 130, the support spring 190 and the first and second check valves 210 and 220 in the oil chamber 113 are urged toward the inmost position of the oil chamber 113, in which oil passes through the channels 211 of the first check valve 210 and then the channel groove 121 to flow along the channels 221a of the second check valve 220.

After flowing like this, oil flows via the oil-pressure channel 310 between the second check valve 220 and the housing 110 toward the support spring 190.

Since a predetermined quantity of oil flows along the channel toward the support spring 190 like this, when the door is closed, the rod 120 is pushed forward compressing the restoring spring 150 so as to minimize impact to the doorframe and resultant noise.

When the door is opened, the restoring spring 150 rebounds from the compressed position so that the bumper 130 and the fixing cap 140 inserted into the housing cover 160 are projected to their original positions as shown in Fig. 1.

This operation is carried out because oil flows via the channels in a reverse sequence in respect to the above sequence when the door is closed.

That is, a predetermined quantity of oil passes through the oil-pressure channel 310, the channels 221a of the second check valve 220, the channel groove 121 of the rod 120 and the channels 211 of the first check valve 210 to flow into the oil chamber 113.

As oil flows in the reverse sequence as above, the restoring spring 150 rebounds from its compressed position pushing the rod 120 backward so that the fixing cap 140 is withdrawn out of the housing cover 160 to the projected position or original parking position.

While it has been described hereinbefore about the normal operation with the predetermined quantity of oil flowing through the channels when the door is closed lightly, the following description will present an operation in which the door is closed abruptly.

If the door is abruptly closed when the bumper 130 and the fixing cap 140 of the rod 120 are exposed from the housing cover 160, a heavy impact is applied to the bumper 130 generating instantaneous surge pressure. If the surge pressure exceeds the resistant force of the support spring 190, the surge pressure pushes the rod 120 toward the inmost position of the housing.

However, the rod 120 is not pushed forward at this time by the following reason:

The channel groove 121 connecting between the first and second check valves 210 and 220 are shut instantaneously as shown in Fig. 2 so that oil does not flow unlike the normal operation.

The channel groove 121 is shut owing to throttling effect and inertia of rest and motion.

The constant quantity of oil flows through the channels of the first and second check valves 210 and 220 as set forth in reference to the normal operation in which the door is slightly closed. However, if the surge pressure applied to the bumper 130 of the rod 120 is abruptly applied via the first check valve 210 to the channels 211 and 221a and the channel groove 121, a throttling effect occurs in the channels 211 and 221a and the channel groove 121 remarkably reducing the quantity of oil passing through the same compared to the normal operation.

The throttling effect occurs more apparent since oil flows through the channels 211 and 221a and the channel groove 121 along complicatedly bent courses rather than straight lines as shown in a broken line in Fig. 3.

Further inertia of motion takes place at the same time.

Inertia of motion may be observed, for example, when passengers are forced to fall forward on a running bus which suddenly stops at appearance of an obstacle.

The above throttling effect creates the same effect to force the first and second check valves 210 and 220 forward as the bus is suddenly stopped forcing the passengers forward. However, the support spring 190 and the first and second check valves 210 and 220 are tightly assembled in a predetermined space of the rod via the E-rings 123 so that no room is left to move the same. This makes the first and second check valves 210 and 220 maintain the position as shown in Fig. 1 where the channels 211 and 221a and the channel groove 121 are in the communicating state.

Moreover, while the rod is not moved forward as set forth above, inertia of rest occurs in the first and second check valves 210 and 220.

Inertia of rest may be observed, for example, when passengers are forced to fall backward on a parked bus making a sudden departure.

If the surge pressure owing to sudden impact to the door as above exceeds the resistant force of the support spring 190 which corresponds to the force of the passengers for standing up on the bus holding handles, the first and second check valves 210 and 221a are pressed backward compressing the support spring 190 as shown in Fig. 2 from the communicating state of the channel groove 121 and the channels 211 and 221a of the first and second check valves 210 and 220 under the resistant force of the support spring 190 as the passengers are forced to fall backward on the bus.

When the first and second check valves 210 and 220 are pressed backward as above, the channel groove 121 is no longer in the communicating position between the channels 211 and 221a of the first and second check valves 210 and 220 resultantly shutting the channels 211 and 221a.

The channels 211 and 221a are shut blocking oil flow while the channel groove 121 is no longer in the communicating position so that the rod 120 is not pushed forward and the bumper 130 and the fixing cap 140 do not move into the housing cover 160. The initial surge pressure owing to the door naturally decreases as time passes so that the resistant force of the support spring 190 gradually exceeds the surge pressure.

As the resistant force of the support spring 190 gradually exceeds the surge pressure, the compressed support spring 190 rebounds into the original position pushing forward the first and second check valves 210 and 220.

This restores the channels 211 and 221a into the initial position communicating with the channel groove 121 again.

As the channels are opened as above, a predetermined quantity of oil gradually flows through the channels so that the bumper 130 and the fixing cap 140 of the rod 120 move into the housing cover 160 as shown in Fig. 3 to close the door gradually.

### INDUSTRIAL APPLICABILITY

As set forth above, the door damper of the invention prevents the door from directly colliding with the doorframe in closing the door so that impact is minimized and noise is not generated thereby affording a comfortable indoor atmosphere to a house. Further, the door damper of the invention can prevent injury of a finger or other body regions put between the door and the doorframe.

## Claims

1. A door damper for damping a furniture door or a drawer, comprising:
a housing (110) partitioned into an oil chamber (113) and an oil leakage-preventive chamber (114) by a shoulder (112)
a rod (120) provided with a bumper (130) and sealingly guided by a bushing (180) into the housing (110):
first and second check valves (210; 220) each having a plurality of channels (211,221), the first and second valves (210,220) being mounted on the rod (120) with the channels (211;221) communicating with a channel groove (121) and thereby installed in the oil chamber (113);
a support spring (190) for supporting the second check valve (220);
a first anti-release member for preventing release of the first and second check valves (210,220) and the support springs (190);
the bushing (180) having a packing in an outer periphery and seated and installed on the shoulder (112);
an oil seal (170) contacting with the bushing (180) and having a shaft portion (171) and a flange portion (172);
a housing cover (160), fitted around the rod (120), having a seating projection (161) in an inner bottom and a coupling projection (162) in an outer bottom, the coupling projection (162) having a coupling recess (162a) for receiving the shaft portion (171) of the oil seal (170),
a restoring spring (150) mounted on the rod (120) and with one end mounted on an outer periphery of the seating projection (161);
a fixing cap (140) mounted on the other end of the restoring spring (150);
a second anti-release member for preventing release of the bushing (180), the oil seal (170), the housing cover (160), the restoring spring (150) and the fixing cap (140) mounted on the rod (120); and
a bumper (130) being coupled with the fixing cap (140); said first and second anti-release members consisting of respective elements gripped to the rod (120).

2. The door damper in accordance with claim1, wherein the channels (211) of the first check valve (210) are provided in two directions, and the channels (221) of the second check valve (220) are provided in four directions.

3. The door damper in accordance with claim 1, wherein the rod (120) is provided with a plurality of gripping groves (122) and the anti-release members inserted into the gripping grooves (122) are configured as E-rings (123).

## Patentansprüche

1. Ein Türdämpfer zum Dämpfen einer Möbeltür oder einer Schublade, umfassend:
ein durch eine Schulter (112) in eine Ölkammer (113) und eine Leck vorbeugende Ölkammer (114) aufgeteiltes Gehäuse (110),
einen Stab (120) an dem ein Puffer (130) angeordnet ist und der abdichtend durch eine Buchse (180) in dem Gehäuse (110) geführt wird,
erste und zweite Rückschlagventile (210, 220) mit jeweils einer Mehrzahl von Kanälen (211, 221), während das erste und zweite Ventil (210, 220) auf dem Stab (120) montiert sind, so dass die Kanäle mit einer Kanalrille (121) kommunizieren und dadurch in der Ölkammer (113) installiert sind,
eine Unterstützungsfeder (190) zum Unterstützen des zweiten Rückschlagventils (220),
ein erstes Anti-Löse-Element zum Verhindern des Lösens der ersten und zweiten Rückschlagventile (210, 220) und der Unterstützungsfeder (190),
die Buchse (180) weist eine Abdichtung in einer äußeren Peripherie auf und ist auf der Schulter (112) angeordnet und installiert,
eine Öldichtung (170), die mit der Buchse (180) verbunden ist und einen Schaftbereich (171) und einen Flanschbereich (172) aufweist,
eine um den Stab (120) angeordnete Gehäuseabdeckung (160) mit einem aufnehmenden Vorsprung (161) in einer inneren Unterseite und einem verbindenden Vorsprung (162) in einer äußeren Unterseite, während der verbindende Vorsprung (162) eine verbindende Vertiefung (162a) zum Empfangen des Schaftbereichs (171) der Öldichtung (170) aufweist,
eine auf den Stab (120) montierte Rückstellfeder (150), die mit einem Ende auf eine äußere Peripherie des aufnehmenden Vorsprungs (161) montiert ist,
eine auf dem anderen Ende der Rückstellfeder (150) montierte Befestigungskappe (140),
ein zweites Anti-Löse-Element zum Verhindern des Lösens der Buchse (180), der Öldichtung (170), der Gehäuseabdeckung (160), der Rückstellfeder (150) und der auf dem Stab (120) montierten Befestigungskappe (140) und
einen mit der Befestigungskappe (140) verbundenen Puffer (130), während
die ersten und zweiten Anti-Löse-Elemente aus entsprechenden Elementen bestehen, die sich an dem Stab (120) festhalten.

2. Der Türdampfer gemäß Anspruch 1, in dem die Kanäle (211) des ersten Rückschlagventils (210) in zwei Richtungen bereitgestellt werden und die Kanäle (221) des zweiten Rückschlagventils (220) in vier Richtungen bereitgestellt werden.

3. Der Türdämpfer gemäß Anspruch 1, in dem der Stab (120) mit einer Mehrzahl von Festhalterillen (122) ausgestattet ist und die in die Festhalterillen (122) eingesetzten Anti-Löse-Elemente sind wie E-Ringe (123) konfiguriert.

## Revendications

1. Amortisseur de porte pour amortir une porte ou un tiroir de meuble, comprenant :
un boîtier (110) divisé en une chambre à huile (113) et une chambre de prévention de fuite d'huile (114) par un épaulement (112),
une tige (120) munie d'un butoir (130) et guidée de manière étanche par une douille (180) dans le boîtier (110),
un premier et un second clapets de retenue (210, 220) comportant chacun une pluralité de canaux (211, 221), le premier et le second clapets (210, 220) étant montés sur la tige (120) avec les canaux (211, 221) communiquant avec une rainure de canal (121) et étant ainsi installés dans la chambre à huile (113) ;
un ressort de support (190) conçu pour supporter le second clapets de retenue (220) ;
un premier élément anti-libération pour empêcher la libération du premier et du second clapets de retenue (210, 22) et du ressort de support (190) ;
la douille (180) présentant une garniture d'étanchéité dans une périphérie externe et étant installée sur l'épaulement (112) ;
un joint à huile (140) en contact avec la douille (180) et présentant une partie formant arbre (171) et une partie formant bride (172) ;
un couvercle de boîtier (160) adapté autour de la tige (120), ayant une saillie d'assise (161) dans un fond interne et une saillie de couplage (162) dans un fond externe, la saillie de couplage (162) ayant un renfoncement de couplage (162a) pour recevoir la partie formant arbre (171) du joint à huile (170),
un ressort de rétablissement (150) monté sur la tige (120) et avec une extrémité montée sur une périphérie externe de la saillie d'assise (161) ;
une calotte de fixation (140) montée à l'autre extrémité du ressort de rétablissement (150),
un second élément anti-libération pour empêcher la libération de la douille (180), du joint à huile (170), du couvercle de boîtier (160), du ressort de rétablissement (150) et de la calotte de fixation (140) montés sur la tige (120), et
un butoir (130) couplé à la calotte de fixation (140), lesdits premier et second éléments anti-libération consistant en des éléments respectifs serrés sur la tige (120).

2. Amortisseur de porte selon la revendication 1, dans lequel les canaux (211) du premier clapet de retenue (210) sont disposés dans deux directions, et les canaux (224) du second clapet de retenue (220) sont disposés dans quatre directions.

3. Amortisseur de porte selon la revendication 1, dans lequel la tige (120) est munie d'une pluralité de rainures de serrage (122) et les éléments anti-libération insérés dans les rainures de serrage (122) sont configurés comme des anneaux de retenue en forme de E (123).
